# EUROPEAN PATENT SPECIFICATION

(11) **EP 3 808 574 B1**
(45) Date of publication and mention of the grant of the patent: **02.08.2023**
(21) Application number: 19822076.6
(22) Date of filing: 12.06.2019
(51) Int. Cl.: B60C 9/18, B60C 1/00, B60C 9/22, B60C 17/00, B60C 9/20

(54) **PNEUMATIC TIRE**
LUFTREIFEN
BANDAGE PNEUMATIQUE

(30) Priority: 18.06.2018 JP 2018115416
(43) Date of publication of application: 21.04.2021
(73) Proprietor: Bridgestone Corporation, Chuo-Ku Tokyo 104-8340 (JP)
(72) Inventor: KURATA, Takayuki, Tokyo 104-8340 (JP)
(74) Representative: Marks & Clerk LLP
(86) International application number: PCT/JP2019/023262
(87) International publication number: WO 2019/244740

(56) References cited:
- EP-A1- 2 505 386
- WO-A1-2016/017556
- CN-A- 102 548 775
- JP-A- 2005 219 512
- JP-A- 2007 069 745
- JP-A- 2011 195 046
- JP-A- 2017 186 002
- JP-A- 2017 206 210
- JP-A- 2018 079 901
- JP-A- 2018 090 056
- JP-A- 2018 090 056

## Description

### TECHNICAL FIELD

The present invention relates to a pneumatic tire provided with a belt layer.

### BACKGROUND ART

A pneumatic tire to be mounted to an automobile commonly has a structure in which a belt is provided at a tire diameter direction outer side of a carcass, the belt being provided with two or more angled belt plies and a reinforcing layer or the like, and the belt plies include cords that are angled relative to the tire circumference direction (for example, see Japanese Patent Application Laid-Open (JP-A) Nos. 2013-244930 (Patent Document 1) and 2013-220741 (Patent Document 2)). Attention is also drawn to the disclosures of JP2018 090056, EP2 505 386, JP2017 186002 and CN102548775, wherein JP2018 090056 is showing the features of the preamble of claim 1.

### SUMMARY OF INVENTION

### TECHNICAL PROBLEM

Because pneumatic tires according to Patent Documents 1 and 2 are provided with two or more layers of angled belt plies, in-plane shear stiffness is assured. However, because there are many layers of the plies, a reinforcing layer and the like, it is difficult to reduce the weight of a tire.

In consideration of the circumstances described above, an object of the present disclosure is to provide a pneumatic tire that may both assure in-plane shear stiffness of a belt and reduce tire weight.

### SOLUTION TO PROBLEM

A pneumatic tire according to a first aspect includes: a pair of bead cores; a carcass extending between the pair of bead cores; a belt layer including: an annular resin main body that is disposed at an outer side, in a tire radial direction, of the carcass and is formed of resin, and reinforcing cords that extend in a tire circumferential direction, that are spaced apart in a tire width direction, and that are embedded in the resin main body; and a reinforcing layer disposed at an inner side, in the tire radial direction, of the belt layer, the reinforcing layer including fiber cords that extend at an angle of at most ±45° relative to the tire width direction.

In the pneumatic tire according to the first aspect, the belt layer including the resin main body and the reinforcing cords embedded in the resin main body is provided at the tire radial direction outer side of the carcass. In the belt layer, the reinforcing cords extend in the tire circumference direction and are arrayed spaced apart in the tire width direction.

Thus, because the resin main body is disposed between the reinforcing cords, a higher in-plane shear stiffness may be provided than in a structure in which rubber is disposed between the reinforcing cords. In addition, weight of the tire may be reduced.

Although this provides in-plane shear stiffness, the resin main body of the belt layer is more susceptible to cracks forming in the direction along the reinforcing cords. In the pneumatic tire according to the first aspect, the reinforcing layer including the fiber cords that extend at an angle of not more than ±45° relative to the tire width direction is disposed at the tire radial direction inner side of the belt layer. Therefore, deformations in which the belt layer is stretched in the tire width direction may be restrained and durability of the belt layer may be improved.

In a pneumatic tire according to a second aspect, the fiber cords extend at an angle of at most ± 10° relative to the tire width direction.

According to the pneumatic tire according to the second aspect, because the fiber cords extend at an angle of not more than ±10° relative to the tire width direction, deformations in which the belt layer is stretched in the tire width direction may be restrained more effectively.

In a pneumatic tire according to a third aspect, a width of the reinforcing layer is at least a quarter of a belt width of the belt layer.

According to the pneumatic tire according to the third aspect, because the reinforcing layer is disposed in at least quarter of the belt width, deformations in the tire width direction may be restrained.

A pneumatic tire according to a fourth aspect further includes, at a tire side portion, a side reinforcing portion at an inner side, in the tire width direction, of the carcass, wherein the reinforcing layer is superposed in the tire radial direction with an outer side end, in the tire radial direction, of the side reinforcing portion.

According to the pneumatic tire according to the fourth aspect, the reinforcing layer and the side reinforcing portion link and provide continuous reinforcement from the tire side portion to the belt layer. Therefore, during running in a state in which internal pressure is low, deformation of the belt layer may be suppressed effectively and running may be continued.

### ADVANTAGEOUS EFFECTS OF INVENTION

According to the pneumatic tire according to the present invention, both assurance of in-plane shear stiffness and a reduction in tire weight may be provided.

### BRIEF DESCRIPTION OF DRAWINGS

Fig. 1 is a sectional diagram depicting a state in which a pneumatic tire according to a present exemplary embodiment is cut in a tire width direction and a tire diameter direction.
Fig. 2 is a partial section diagram showing a resin annular belt of the pneumatic tire according to the present exemplary embodiment.
Fig. 3 is a partial cutaway diagram, seen in plan view, of the resin annular belt and a reinforcing layer of the pneumatic tire according to the present exemplary embodiment.
Fig. 4 is a sectional diagram depicting a state in which a pneumatic tire according to a variant example of the present exemplary embodiment is cut in the tire width direction and the tire diameter direction.

### DETAILED DESCRIPTION

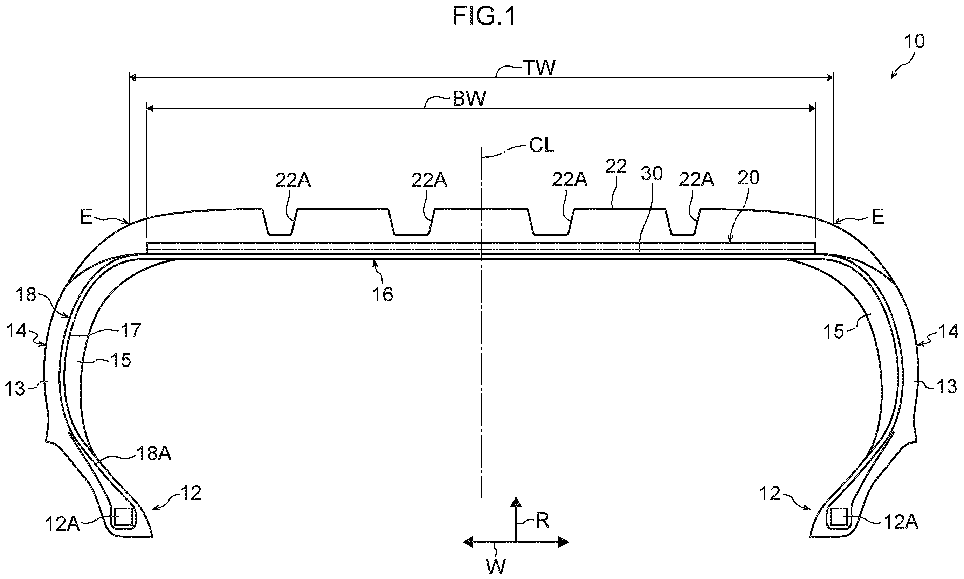

Fig. 1 shows a pneumatic tire 10 according to an exemplary embodiment of the present invention. The pneumatic tire 10 illustrates a radial tire as an example. The arrow W in the drawings indicates a tire width direction, and the arrow R indicates a tire diameter direction. The meaning of the term "tire width direction" as used herein is intended to include directions parallel to a rotation axis of the pneumatic tire 10. The meaning of the term "tire diameter direction" is intended to include directions orthogonal to the rotation axis of the pneumatic tire 10. The symbol CL indicates an equatorial plane of the tire 10 (tire equatorial plane).

In the present exemplary embodiment, contact patch ends E and a contact patch width TW of a tread 22, which is described below, are a region that is loaded in accordance with a maximum load performance when the pneumatic tire 10 is mounted to a standard rim complying with the JATMA YEAR BOOK (from the Japan Automobile Tire Manufacturers Association, 2018 edition), filled to an internal pressure of 100% of an air pressure (a maximum air pressure) corresponding with the maximum load performance (the bold-text load in the table of internal pressure against load performance) in the JATMA YEAR BOOK for the employed size and ply rating, and disposed such that the rotation axis thereof is parallel with a horizontal plate in a static state. A usage site or production site complies with the respective standards when the TRA standards and the ETRTO standards are applied.

The pneumatic tire 10 includes a pair of bead portions 12 in which bead cores 12A are embedded, a pair of side portions 14 that extend to tire diameter direction outer sides from each of the bead portions 12, and a crown portion 16 that extends from the side portions 14 to the tire width direction inner sides thereof. A carcass 18 formed of a single-layer carcass ply 18A spans between one and the other of the bead portions 12.

An inner liner 17 formed of rubber is disposed at the tire inner side of the carcass 18. Side rubber layers 13 are disposed at the tire width direction outer sides of the carcass 18.

A side reinforcing portion 15 is provided at the tire width direction inner side of each side portion 14 of the carcass 18. The side reinforcing portions 15 are formed of a reinforcing rubber to allow running of a predetermined distance in a state supporting the weight of a vehicle and occupant(s) when internal pressure of the pneumatic tire 10 is reduced due to a puncture or the like. Because the side reinforcing portions 15 are provided, the pneumatic tire 10 according to the present exemplary embodiment functions as a "run-flat tire" that enables running of the predetermined distance in the state supporting the weight of the vehicle and occupant(s) when internal pressure is reduced due to a puncture or the like. The side reinforcing portions 15 may be formed of, for example, a material of which a rubber is a principal component, but this is not limiting. The side reinforcing portions 15 may be formed of an alternative material, and may be formed with, for example, a thermoplastic resin or the like as the principal component.

A reinforcing layer 30 is disposed at the crown portion 16 at the tire diameter direction outer side of the carcass 18. The reinforcing layer 30 is formed of a fiber sheet, which is formed by covering plural fiber cords 32 with a rubber. The fiber cords 32 are arrayed in parallel with one another, and extend in parallel in the tire width direction. That is, viewed in the tire diameter direction, the fiber cords 32 are disposed at an angle θ of 0° relative to the tire width direction. The fiber cords 32 that are employed may be organic fiber cords of polyester, polyethylene, polypropylene, KEVLAR or the like, glass fiber cords, inorganic fiber cords such as steel cords or the like, and so forth.

The reinforcing layer 30 is disposed at the whole width, from one end to the other end in the tire width direction, of a resin annular belt 20, which is described below.

The reinforcing layer 30 is superposed in the tire diameter direction with tire diameter direction outer side ends of the side reinforcing portions 15. That is, viewed in the tire diameter direction, the reinforcing layer 30 and the side reinforcing portions 15 overlap for some width in the tire width direction. Thus, the pneumatic tire 10 is linked and continuously reinforced from each side portion 14 to the crown portion 16.

The resin annular belt 20 is provided at the tire diameter direction outer side of the reinforcing layer 30. The resin annular belt 20 is formed in a circular ring shape and is described in more detail below. The tread 22 is disposed at the tire diameter direction outer side of the resin annular belt 20. A plural number of main grooves 22A are formed in the tread 22, along the tire circumference direction.

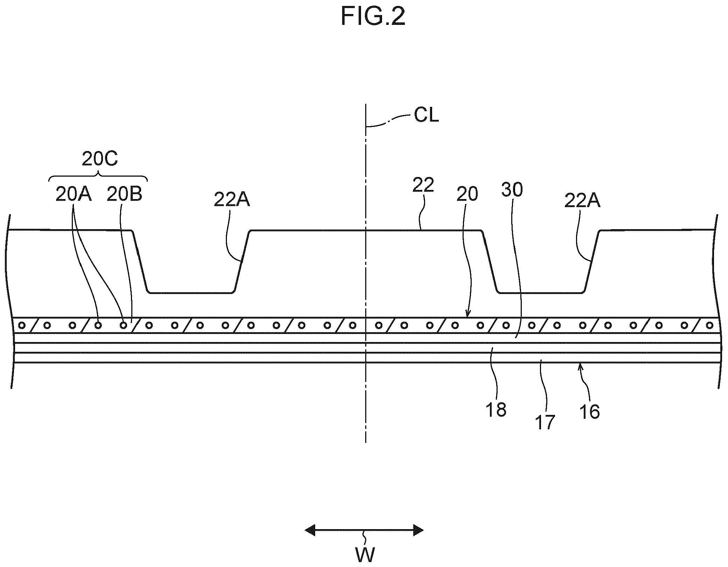

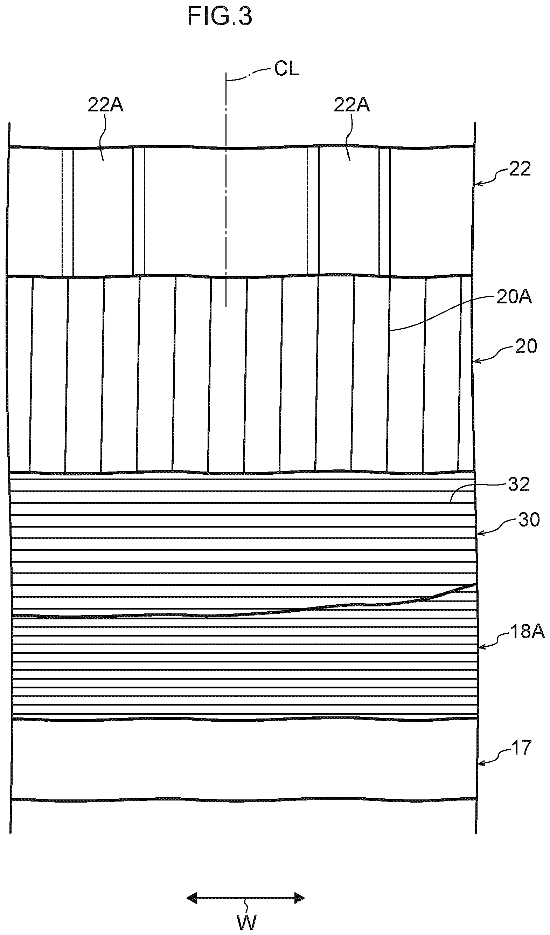

As shown in Fig. 2 and Fig. 3, the resin annular belt 20 includes reinforcing cords 20A and a resin main body 20B. The reinforcing cords 20A are wound round in a helical shape in the tire circumference direction. The resin main body 20B is formed of a resin material that covers the reinforcing cords 20A. The resin annular belt 20 may be constituted as a ring-shaped hoop in which a resin-covered cord 20C is wound round in a helical shape and integrated. In the resin-covered cord 20C, the reinforcing cords 20A are covered with the resin main body 20B.

In the present exemplary embodiment, one of the resin-covered cord 20C is wound in the helical shape in the tire circumference direction to form the resin annular belt 20. However, the reinforcing cords 20A that extend in the tire circumference direction may be embedded in the resin main body 20B in an alternative structure. For example, the resin-covered cord 20C may be formed in a ring shape and a plural number of these ring-shaped resin-covered cords 20C may be arrayed in the tire width direction to form the resin annular belt 20. In the present exemplary embodiment, the resin-covered cord 20C is wound round at an angle of at most 5° relative to the tire circumference direction.

A resin material that is employed for the resin main body 20B has a higher tensile modulus of elasticity than a rubber material constituting the side rubber layer 13 and a rubber material forming the tread 22. It is preferable if the tensile modulus of elasticity of the resin main body 20B as defined in JIS K7113:1995 is at least 100 MPa. It is also preferable if an upper limit of the tensile modulus of elasticity of the resin main body 20B is not more than 1000 MPa. Within that range, it is particularly preferable if the tensile modulus of elasticity of the resin main body 20B is within the range 200 to 700 MPa.

A material of the resin main body 20B that is employed may be, for example, a thermoplastic resin a thermoplastic elastomer, a thermosetting resin, a general-purpose resin such as a (meth)acrylic resin, EVA resin, vinyl chloride resin, fluorine-based resin, silicone-based resin or the like or, alternatively, an engineering plastic (which may be a super engineering plastic) or the like. The meaning of the term "resin material" as used herein is not intended to include vulcanized rubbers.

The meaning of the term "thermoplastic resin" (including thermoplastic elastomers) is intended to include polymer compounds of which the material softens and flows with a rise in temperature, and goes into a relatively hard and strong state when cooled. The present Description distinguishes between: thermoplastic elastomers, which are polymer compounds of which the material softens and flows with a rise in temperature, goes into a relatively stiff and strong state when cooled, and features rubber-like resilience; and thermoplastic resins that are not elastomers, which are polymer compounds of which the material softens and flows with a rise in temperature, goes into a relatively hard and strong state when cooled, and does not feature rubber-like resilience.

As a thermoplastic resin (which may be a thermoplastic elastomer), polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), dynamically vulcanized thermoplastic elastomers (TPV) and the like can be mentioned, and also polyolefin-based thermoplastic resins, polystyrene-based thermoplastic resins, polyamide-based thermoplastic resins, polyester-based thermoplastic resins and the like.

The meaning of the term "thermosetting resin" is intended to include polymer compounds that form a three-dimensional matrix structure and harden with a rise in temperature; for example, phenol resins, epoxy resins, melamine resins, urea resins and the like can be mentioned.

The reinforcing cords 20A are steel cords. A steel is the principal component of these steel cords and small amounts of various contents such as carbon, manganese, silicon, phosphorus, sulfur, copper, chromium and the like may be included.

An outer diameter of a tire width direction central portion of the resin annular belt 20 is greater than outer diameters of both of tire width direction end portions of the resin annular belt 20. Viewed in a section cut along the tire axis, the resin annular belt 20 is formed in a gentle circular arc shape of which the tire width direction central portion protrudes to the tire diameter direction outer side. Note that this is not limiting; the resin annular belt 20 may be formed with constant diameter and constant thickness and, viewed in the section cut along the tire axis, may be formed in a linear shape.

It is preferable if a width BW of the resin annular belt 20 is at least 75% and at most 110% of a tread width TW of the tread 22 measured in the tire axis direction (a distance between contact patch ends E).

### - Operation and Effects -

Now, operation and effects of the tire 10 according to the present exemplary embodiment are described.

In the pneumatic tire 10 according to the present exemplary embodiment, the crown portion 16 of the carcass 18 is reinforced by the resin annular belt 20. The resin annular belt 20 is formed by the reinforcing cords 20A that are wound round in the helical shape being covered with the resin main body 20B. As a result, a higher in-plane shear stiffness may be provided than in a structure in which rubber is disposed between reinforcing cords. In addition, weight of the tire may be reduced.

Because the in-plane shear stiffness of the resin annular belt 20 is assured, sufficient lateral force may be generated when a slip angle is applied to the pneumatic tire 10. Therefore, steering stability may be assured and responsiveness may be improved.

Because of the resin annular belt 20, out-of-plane shear stiffness is also assured, and when a large lateral force is applied to the pneumatic tire 10, buckling of the tread 22 (a phenomenon in which the surface of the tread 22 undulates and a portion of the tread 22 separates from the ground) may be suppressed. In particular, because buckling during low-pressure running is suppressed, the resin annular belt 20 may be excellently employed in the pneumatic tire 10 that functions as a run-flat tire as in the present exemplary embodiment.

Because the reinforcing layer 30 including the fiber cords 32 that extend in the tire width direction is disposed at the tire diameter direction inner side of the resin annular belt 20, deformations in which the resin annular belt 20 is stretched in the tire width direction are restrained. Therefore, durability of the resin annular belt 20 may be improved. In addition, strain of the resin annular belt 20 may be moderated.

In the present exemplary embodiment, each fiber cord 32 extends in the tire width direction. In other words, viewed in the tire diameter direction, the fiber cord 32 is disposed at an angle of 0° relative to the tire width direction. However, the fiber cords 32 need not necessarily be disposed in this direction. Viewed in the tire diameter direction, each fiber cord 32 may be disposed at an angle of up to ±45° relative to the tire width direction. However, it is preferable if, viewed in the tire diameter direction, the fiber cord 32 is disposed at an angle of at most ±10° relative to the tire width direction. When the fiber cords 32 are disposed at this angle, deformations of the resin annular belt 20 in the tire width direction may be restrained effectively.

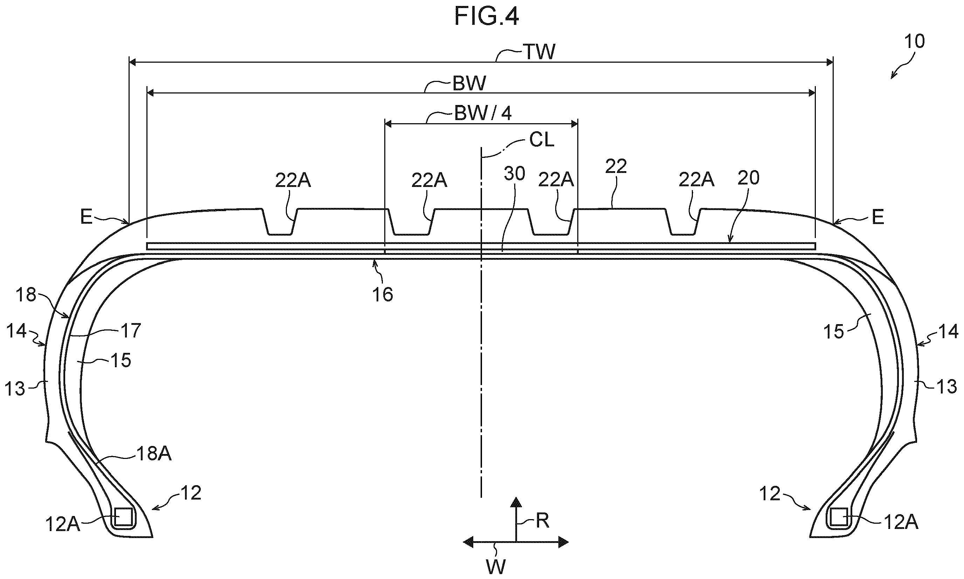

In the pneumatic tire 10 according to the present exemplary embodiment, because the reinforcing layer 30 is disposed across the whole width of the resin annular belt 20, deformations of the resin annular belt 20 in the tire width direction may be restrained effectively. However, the reinforcing layer 30 need not necessarily be disposed across the whole width of the resin annular belt 20. As illustrated in Fig. 4, it is sufficient that the reinforcing layer 30 be disposed in a width of at least a quarter of the belt width BW of the resin annular belt 20. If the reinforcing layer 30 is disposed to straddle the tire equator plane at the center in the tire width direction as in the present exemplary embodiment, durability of the resin annular belt 20 may be improved effectively at the tire width direction central portion. However, the reinforcing layer 30 need not necessarily be disposed at a central portion of the resin annular belt 20 in the tire width direction but may be disposed to one side.

In the pneumatic tire 10 according to the present exemplary embodiment, because the reinforcing layer 30 is superposed in the tire diameter direction with the tire diameter direction outer side ends of the side reinforcing portions 15, deformations of the resin annular belt 20 during running in a state of low internal pressure may be suppressed effectively, and the running may be continued.

In the present exemplary embodiment, a run-flat tire including the side reinforcing portions 15 is described as an example, but the present invention may also be applied to a pneumatic tire that does not include the side reinforcing portions 15.

## Claims

1. A pneumatic tire (10), comprising:
a pair of bead cores (12A);
a carcass (18) extending between the pair of bead cores;
a belt layer including:
an annular resin main body (12B) that is disposed at an outer side, in a tire radial direction, of the carcass and is formed of resin, and
reinforcing cords (20A) that extend in a tire circumferential direction, that are spaced apart in a tire width direction, and that are embedded in the resin main body;
**characterized in that**
a reinforcing layer (30) disposed at an inner side, in the tire radial direction, of the belt layer, the reinforcing layer including fiber cords (32) that extend at an angle of at most ±45° relative to the tire width direction.

2. The pneumatic tire according to claim 1, wherein the fiber cords extend at an angle of at most ±10° relative to the tire width direction.

3. The pneumatic tire according to claim 1 or claim 2, wherein a width of the reinforcing layer is at least a quarter of a belt width of the belt layer.

4. The pneumatic tire according to any one of claims 1 to 3, further comprising, at a tire side portion, a side reinforcing portion at an inner side, in the tire width direction, of the carcass, wherein the reinforcing layer is superposed in the tire radial direction with an outer side end, in the tire radial direction, of the side reinforcing portion.

## Patentansprüche

1. Luftreifen (10), der Folgendes umfasst:
ein Paar von Wulstkernen (12A);
eine Karkasse (18), die sich zwischen dem Paar von Wulstkernen erstreckt;
eine Gürtellage, die Folgendes einschließt:
einen ringförmigen Harzhauptkörper (12B), der an einer, in einer Reifenradialrichtung, äußeren Seite der Karkasse angeordnet ist, und aus Harz gebildet ist, und
Verstärkungskords (20A), die sich in einer Reifenumfangsrichtung erstrecken, die in einer Reifenbreitenrichtung voneinander beabstandet sind, und die in dem Harzhauptkörper eingebettet sind;
**dadurch gekennzeichnet, dass**
eine Verstärkungslage (30), die an einer, in der Reifenradialrichtung, inneren Seite der Gürtellage angeordnet ist, wobei die Verstärkungslage Faserkords (32) einschließt, die sich in einem Winkel von höchstens ± 45° im Verhältnis zu der Reifenbreitenrichtung erstrecken.

2. Luftreifen nach Anspruch 1, wobei sich die Faserkords in einem Winkel von höchstens ± 10° im Verhältnis zu der Reifenbreitenrichtung erstrecken.

3. Luftreifen nach Anspruch 1 oder Anspruch 2, wobei eine Breite der Verstärkungslage mindestens ein Viertel einer Gürtelbreite der Gürtellage beträgt.

4. Luftreifen nach einem der Ansprüche 1 bis 3, der ferner, an einem Reifenseitenabschnitt, einen Seitenverstärkungsabschnitt an einer, in der Reifenbreitenrichtung, inneren Seite der Karkasse umfasst, wobei die Verstärkungslage in der Reifenradialrichtung mit einem, in der Reifenradialrichtung, äußeren Seitenende des Seitenverstärkungsabschnitts überlagert ist.

## Revendications

1. Pneumatique (10), comprenant :
une paire de tringles (12A) ;
une carcasse (18) s'étendant entre la paire de tringles ;
une couche de ceinture incluant :
un corps principal annulaire en résine (12B) qui est disposé au niveau d'un côté externe, dans une direction radiale du pneumatique, de la carcasse et est formé de résine, et
des câblés de renforcement (20A) qui s'étendent dans une direction circonférentielle du pneumatique, qui sont espacés dans une direction de la largeur du pneumatique et qui sont incorporés dans le corps principal en résine ;
**caractérisé en ce que**
une couche de renforcement (30) est disposée au niveau d'un côté interne, dans la direction radiale du pneumatique, de la couche de ceinture, incluant des câblés de fibres (32) qui s'étendent à un angle maximal de ±45°par rapport à la direction de la largeur du pneumatique.

2. Pneumatique selon la revendication 1, dans lequel les câblés de fibres s'étendent à un angle maximal de ±10° par rapport à la direction de la largeur du pneumatique.

3. Pneumatique selon les revendications 1 ou 2, dans lequel une largeur de la couche de renforcement représente au moins un quart de la largeur de ceinture de la couche de ceinture.

4. Pneumatique selon l'une quelconque des revendications 1 à 3, comprenant en outre, au niveau d'une partie latérale du pneumatique, une partie de renforcement latérale au niveau d'un côté interne, dans la direction de la largeur du pneumatique, de la carcasse, dans lequel la couche de ceinture est superposée dans la direction radiale du pneumatique, avec une extrémité latérale externe, dans la direction radiale du neumatique, de la partie de renforcement latérale.
